# EUROPEAN PATENT SPECIFICATION

(11) **EP 2 294 325 B1**
(45) Date of publication and mention of the grant of the patent: **10.10.2012**
(21) Application number: 08748072.9
(22) Date of filing: 20.05.2008
(51) Int. Cl.: F16C 9/00, F16C 17/04, F16C 17/10, F16C 33/10, F16C 43/02

(54) **Flange for a flanged bearing**
Flansch für ein Flanschlager
Bride pour un palier à bride

(43) Date of publication of application: 16.03.2011
(73) Proprietor: Mahle Metal Leve S/A, CEP: 13214-970 Jundiaí - SP (BR)
(72) Inventor: UEHARA, Samantha, CEP:02256-070 São Paulo - SP (BR); ALMEIDA ALVES, Erik, CEP:03171-010 São Paulo - SP (BR); SEISHIRO TERAMOTO, Paulo, CEP:05396-060 São Paulo - SP (BR)
(74) Representative: Burt, Matthew Thomas
(86) International application number: PCT/BR2008/000147
(87) International publication number: WO 2009/140745

(56) References cited:
- WO-A-2007/031662
- GB-A- 2 262 576
- US-A- 4 599 147
- US-A- 4 702 624
- US-A- 4 714 356
- US-A- 5 192 136
- US-A1- 2002 034 349
- US-A1- 2002 094 143
- US-B1- 6 471 405

## Description

The present invention relates to a flange of a flange bearing designed to accommodate high thrust loads and whose profile promotes a better oil film construction. The flange has coined oil grooves, with or without a ramp after it and a rounded pad in between 2 grooves. To have the above properties achieved, the flange comprises specialty designed grooves and a novel and inventive profile.

### BACKGROUND OF THE INTENTION

Internal combustion engines, as Otto and Diesel cycle four stroke engines, comprise one or more reciprocating pistons connected to a rod which converts its linear moment into a rotation of a shaft called crankshaft. The linear movement of the piston is generated during the "explosion" stroke and it is converted into a rotation of the crankshaft, which is usable to move a vehicle and perform other jobs.

The operation of an internal combustion engine (hereinafter called just IC engine) is simple in concept, but, due to the high loads involved, it is essential to avoid the radial and axial movements of the crankshaft, otherwise the durability and reliability of the engine are drastically reduced.

The components that constrain the crankshaft avoiding its radial and axial movement are called bearings.

Nearly all engines have a minimum of two main bearings, one at each end of the crankshaft, and they may have as many as one more than the number of crank pins. The number of main bearings is a compromise between the extra size, cost and stability of a larger number of bearings, and the compactness and light weight of a smaller number. Both have advantages in terms of performance, as a shorter and more stable crank will produce better engine balance.

During the beginning of the twenty-century, IC engines used to have a few bearings constraining the crankshaft, since these otd engines did not accept well high revs (revolutions per minute) and the power generated was not outstanding. These engines, as a rule, had also a low energetic efficiency and a high fuel consumption considering the amount of power generated.

After the decade of 1960, the development of engines was focused mostly in increasing the energetic efficiency, and the resulting engines were smaller, more powerful and, as a consequence, developed their power in a much higher revs. The combination of these factors (high revs and more power developed) resulted in a high development of the bearings.

Describing in more details, the crankshaft is constrained into the engine block by a series of axially spaced engine bearings (two, three, four, five, seven, etc.). Each engine bearing includes an upper bearing half seated in an arcuate recess of the block and a lower bearing half clamped tightly against the upper bearing half by a supportive bearing cap bolted to the engine block.

At least one of the engine bearings in the set is designed to absorb axial thrust forces imported by the crankshaft during operation. This bearing is called thrust bearing and differs from the other bearings in that it has two axially spaced thrust flanges that project radially outwardly (they have a "C" shape).

The thrust bearing presents opposite axially outwardly directed thrust faces which are seated on their backsides against support surfaces of the block and engage associated lobes of the crankshaft, when necessary to provide support. These thrust flanges typically have a uniform thickness and often are formed with oil grooves and contours to impart a hydrodynamic oil film action to the bearing.

Only one or two of the crankshaft half bearings absorbs axial thrust forces, and their project considers a high level of manufacturing. Evidently, when only one thrust washer supports the thrust load, the unit load is higher on the loaded flange.

Flanges of flanged half bearings for rotary crankshafts are shown some prior art documents, briefly discussed below.

A flange according to the preamble of claim 1 is described in US 2002/0034 349 A1.

US Pat. No. 4,599,147 refers to a split journal bearings having crush relief made by a method using a special plating rack having urethane masks for covering the ends of the split bearings during electroplating. Split thrust bearings having flanges may also be made according to the present invention by providing masking elements between adjacent bearings to prevent over plating at the flange relief areas or at the flange groove. The method eliminates broaching and/or boring operations to form crush relief areas on bearings but instead provides the required relief areas through the exclusion of over plate from said areas by masking. The plating rack features adjustable masks which are adapted to receive bearings within a range of sizes.

US Pat. No. 4,702,624 refers to a flanged half bearing including a plain half bearing rigidly connected to a pair of flanges by projection welds. All finishing operations are carried out on the separate bearing parts prior to assembly so that a finished part results after welding. Each flange is provided with a protrusion which collapses during the projection welding process. Projection welding prevents damage to the bearing antifriction material and also prevents deformation of the bearing parts during welding.

US Pat. No. 4,714,356 refers to a composite thrust collar for a rotary shaft formed from a radial bearing in which the rotating shaft may rotate and at least one axial thrust collar preventing axial movement of the shaft, characterized in that the radial bearing or the axial thrust collar or collars has at least one boss and in that the radial bearing is fixed to the axial thrust collar or collars by welding along said at least one boss and in that said at least one boss interconnects with the radial bearing or axial thrust collar in such a manner that should the weld break the bearing and collar can not rotate nor be radially disposed relative to one another.

US Pat. No. 4,488,826 refers to an engine bearing or bushing having a cylindrical inner bearing surface which is slightly offset relative to the outer surface of the bearing. The amount of offset is very small and the offset is in a direction generally away from the portion of the bearing exposed to the maximum load. The inner bearing surface is offset so that the oil clearance between a journal member and the maximum load portion of the bearing is minimized to reduce oil film pressure and increase oil film thickness in that region. The offset increases the clearance between the journal member and bearing at a low load area of the bearing to increase oil flow and reduce oil temperature. The transition from the high clearance area to minimum clearance area is uniform so that the oil film thickness will also increase uniformly to its maximum potential.

US Pat. No. 3,972,576 refers to a flanged half bearing having flanges connected to a bearing liner by lugs on the flanges which engage in slots in the liner edges to permit the liner to flex radially. The liner edges have abutments to hold the flanges on the liner and the inner circumferential edges of the flanged ends of the bearing are curved in profile as viewed in cross-section through the bearing axis.

US Pat. No. 6,471,405 refers to an assembled flange-bearing shell including a half-shell shaped radial bearing part and an axial bearing part which can be fixed on one side in the area of the axial front face of the radial bearing part, or partial ring-wheel shaped axial bearing parts which can be fixed on both sides. Each axial bearing part has inward projecting retaining tongues located around its radius. The retaining tongues can be engaged in retaining recesses in the area of an axial rim section of the radial bearing part. The flange-bearing shell has two retaining tongues on both sides of the vertex which form an undercut. The undercut is engaged from below by a clip of the radial bearing part which lies axially adjacent to each respective open-edged retaining recess. The clip is curved inward in an axial direction from its extension along the periphery into the retaining recess in order to secure the axial bearing part against detachment.

US Pat. No. 5,363,557 and 5,192,136 refer to a split crankshaft bearing assembly including two flanged half bearings adapted to collectively encircle a crankshaft. The flanges are formed with oil supply grooves that subdivide the flange surface into thrust bearing pads. Each pad includes a positively sloped ramp surface leading to a raised land surface. The rotating crankshaft drags a film of oil onto the land surface where it provides hydrodynamic thrust support for the shaft. To facilitate close tolerance control on the thrust bearing pad contour, the manufacturing process is carried out so that the oil supply grooves are formed and the thrust face pre-sized prior to formation of the pad final contour. The pad contour is formed by a coining operation.

The half bearings shown presented radial thrust bearings flanges equipped with oil supply grooves or pockets for distributing oil on the flange surfaces, providing at least a partial oil film support between the rotary shaft and the stationary thrust bearing surface. US Pat. No. 4,488,826 shows the use of wedge film hydrodynamic support applied to a radial bearing construction.

By definition a flanged bearing has flanges connected it a bearing liner by lug on the flanges which engage in slots in the liner edges to permit the liner to flex radially (US Pat No. 3,972,576). There are several methods to connect the flange to the plain bearing, as mentioned in patents US Pat No. 6,471,405, US Pat No. 4,702,624 and US Pat No. 4,714,356.

Under high axial thrust load conditions, the oil film support provided by prior art bearings may not always be sufficient to maintain a desired separation between the shaft and the thrust bearing. The oil may be squeezed out of the bearing-shaft interface so as to allow metal-to-metal contact and associated wear of the thrust bearing flanged surface. A better profile on the flange can help the part to establish an oil film during the loading of the part, as it was presented on US Pat No. 5,363,557 or US Pat No. 5,192,136.

### BRIEF DESCRIPTION OF THE INVENTION

The present invention is directed to a flange for use on a flanged bearing according to claim 1.

Each radially extending annular flange has a set of oil supply grooves (3 to 6 grooves distributed in 180º of the thrust washer) subdividing the flange surface into a number of thrust bearing pads. The oil pumped through the supply grooves by the oil pump forms a film that involves the crankshaft and avoids the latter to touch the bearing when the engine is operating.

After research and development, the applicant found that the rounded pads together with the grooves promote a better oil film formation during the thrust washer operation, increasing the durability of the bearing and, as a consequence, of the engine thus equipped.

The bearing is obtained by a manufacturing process called coining, since with this process is possible to obtain the grooves and the rounded profile in the same stamping machine. During this research and development, applicant found that, when the grooves are coined and the pad profile is rounded, a lower load on the coining process is required and the material moved from the grooves areas is conformed on the rounded pads. As a comparison, previous versions of bearings had flat surfaces and required higher die press loads. With this new coning process concept, the tooling life is also increased, consequently there will be less costs related to tooling replacement or maintenance.

The flanged bearing comprises one main piece from which at least one flange protrudes radially outwardly, the flange being able to flex radially when axial load is applied. The flange has a profile that comprises at least two channels equidistantly positioned defining a space therebetween and the defined space has at least two portions, where a first portion defines a ramp starting from the channel and a second portion is arcuate. The channels are formed by coining, and the defined space has a rounded profile.

The ramp has a length between 2.5 to 4.5 millimeters and a depth between 0.050 to 0.150 millimeters, and the space has a height between 0.06 to 0.19 millimeters.

### BRIEF DESCRIPTION OF THE DRAWINGS

Figure 1 - is a perspective view of the 3-piece flanged bearing object of the present invention.
Figure 2 - is a perspective view of the 3-piece flanged bearing object of the present invention, disassembled.
Figure 3 - is a schematic view of the profile of the flange of the 3-piece flanged bearing illustrated in figure 2.
Figure 4 - is a view of a current flange of a flanged bearing after a slam test of 2,000 lbf.).
Figure 5 - is a graphic of the test results of the flange illustrated in figure 4.
Figure 6 - is a view of a current flange of a flanged bearing after a slam test of 2,500 lbf.
Figure 7 - is a graphic of the test results of the flange illustrated in figure 6.
Figure 8 - is a view of the flange of the 3-piece flanged bearing object of the present invention after a slam test of 2,000 lbf.
Figure 9 - is a graphic of the test results of the flange illustrated in figure 8.
Figure 10 - is a view of the flange of the 3-piece flanged bearing object of the present invention after a slam test of 2,500 lbf.
Figure 11 - is a graphic of the test results of the flange illustrated in figure 10.

### DETAILED DESCRIPTION OF THE DRAWINGS

The invention relates to an improved flange of an assembled flanged bearing with profiled thrust washer which presents higher durability due to the increased efficiency of the oil film resulted of the specially shaped flange profile.

As already mentioned, IC engines need bearings to avoid the radial and axial movements of the crankshaft, otherwise the durability and reliability of the engine are drastically reduced. The crankshaft is constrained into the engine block by a series of axially spaced engine bearings (three, four, five, seven, etc.). Each engine bearing includes an upper bearing half seated in an arcuate recess of the block and a lower bearing half clamped tightly against the upper bearing half by a supportive bearing cap bolted to the engine block.

At least one of the engine bearings in the set is designed to absorb axial thrust forces imported by the crankshaft during operation. This bearing is called thrust bearing and differs from the other bearings in that it has two axially spaced thrust flanges that project radially outwardly (they have a "C" shape).

The thrust bearing presents opposite axially outwardly directed thrust faces which are seated on their backsides against support surfaces of the block and engage associated lobes of the crankshaft, when necessary to provide support. These thrust flanges typically have a uniform thickness and often are formed with oil grooves and contours to impart a hydrodynamic oil film action to the bearing.

Only one or two of the crankshaft half bearings absorbs axial thrust forces, and their project considers a high level of manufacturing. Evidently, when only one thrust washer supports the thrust load, the unit load is higher on the loaded flange.

The flanged bearing with profiled thrust washer 1 comprises a main piece 2 to which two flanges 4 according to the present invention are associated.

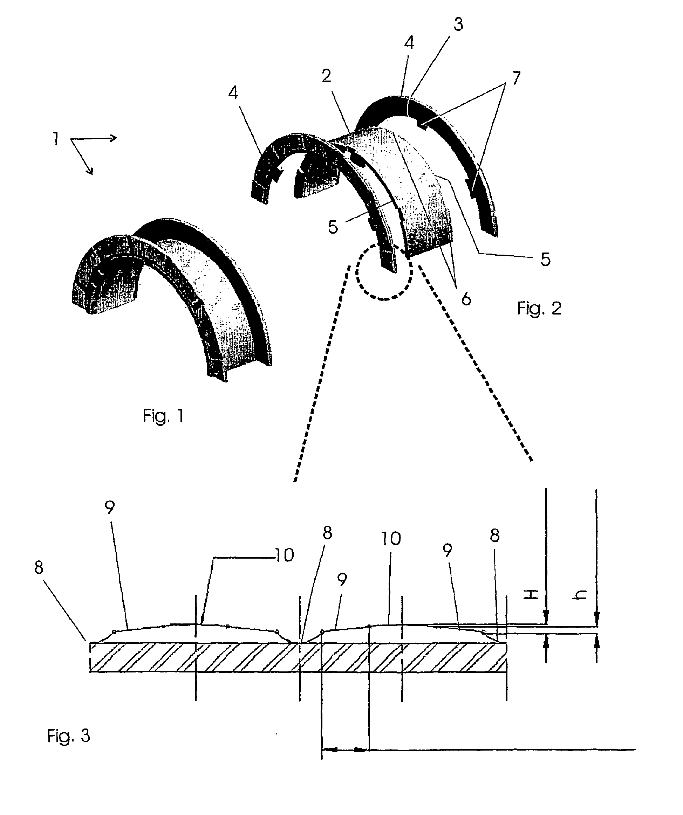

The main piece 2 is positioned between the engine block (specifically, the portion of the block wherein the crankshaft is positioned, called crankcase) and the crankshaft, avoiding the radial movement of the latter with respect to the block. The main piece can be seen in figure 2.

The main piece 2 has a substantially "C" shape and includes at least one orifice (not shown) operatively associated to the oil galleries of the engine block. Hence, when the engine is operating, oil pump supplies pressurized oil which passes through the orifice and forms an oil film that provides hydrodynamic thrust support for the crankshaft, avoiding the metal-metal contact between the latter and the main piece 2, which could reduce severely the useful life of these components.

The lateral portions 5 of the main piece 2 have at least one, but preferably three, apertures/recesses 6 for the positioning of the flanges, as will be described below.

The main piece 2 can be manufactured of hardened and polished steel, soft bronze or other metals/alloys. More preferably, the main piece is made of a bimetalic material, Al alloy cladded onto steel back, AlSnSiCu alloy, AlSnCu alloy or others.

Each flange 4 has a substantially "C" shaped with 180° and, when the thrust bearing 1 is assembled, it protrudes radially outwardly from the respective lateral portion 5 on the main piece 2 (see figures 2 and 3).

The inner surface 3 of the "C" defined by the body of each flange 4 comprises three projections 7 which occupy the space defined by the respective aperture/recess 6 of the main piece 2 when the thrust bearing 1 is assembled (the flange 4 "surrounds" the main piece 2). Evidently, the number and positioning of apertures/recesses 6 and projections 7 must be equivalent in order to enable the cooperation and association between flanges 4 and main piece 2.

The cooperation between the projections 7 of the flange 4 and the apertures 6 of the main piece enable the flanges to flex radially when axial load is applied by the crankshaft.

The flanges 4 can be manufactured of hardened and polished steel, soft bronze or other metals/alloys, i.e. a bimetalic material, Al alloy cladded onto steel back, AlSnSiCu alloy, AlSnCu alloy or others.

The innovation of the thrust washer 1 relies upon the profile of the flanges according to the present invention (one of its main surface, more specifically the one that faces the crankshaft), which enables the existence of a better oil film, increasing consistently the durability of the bearing. After a serious research and development process, applicant concluded that, changing the profile of the flange, he could, concomitantly, reduce the manufacturing costs of the bearing and increase its durability.

The profile of the flange 4 has substantially 180° and includes at least two channels 8 equidistantly positioned (90° to each other) within the flange and, associated to the engine's oil galleries. Other preferred embodiments can have three or six channels 8 for a better operation. In case three channels are used, they are positioned 60° with respect to each other and if six channels are provided, they are positioned 30° with respect to each other.

The space between two channels 8 comprises two portions, where a first portion 9 is a straight ramp starting from the channel and a second portion 10 is arcuate (and starts after the ramp 9), a third portion is provided, in the form of a ramp analogous to the first one, connecting the second portion 10 to the other channel 8. For mode details, see figure 3.

In the preferred embodiment, the profile of the flange 4 has the following characteristics:
- Ramp 9 length (L): 2.5 to 4.5 millimeters;
- Ramp 9 depth (h): 0.050 to 0.150 millimeters;
- Ratio between ramp length and depth: aprox. 35;
- Maximum height (H) of the space between channels: 0.06 to 0.19 millimeters (includes the height of the ramp 9 and the profile 10; excludes the height of the channel's walls); and
- Absence of bumps.

With the above profile, the profile of the flange 4 allows the formation of an oil film with better property and helps to establish it between the flange and the crankshaft, meaning that it will avoid the contact metal to metal between the crankshaft and the flange since the oil will not be squeezed out. The results are the vast improvement in the durability of those components.

The bumps are normally obtained when the channels of flange profile are manufactured by the die press process. The main characteristics of the form of a bump are that it is positioned near the channel (in the ramp), formed by the pressed material. The bump has a higher height with respect to the portion adjacent to it, which results in worse oil film properties, since the elevation of the bump breaks the oil film in some situations when the engine is operating.

As a result, sometimes it was necessary to perform machining operation to remove the bump, increasing the costs of the flange.

On the other hand, the channels 8 of the flanges 4 of the thrust bearing 1 of the present invention are made by coining process, which is cheaper and does not result in the formation of bumps. In the coining process, the rounded profile and the bend radius of the pad of the flange accommodate the pressed/deformed material, avoiding the formation of the bump.

Hence, it is not necessary other manufacturing processes to obtain a flange which enables the formation of oil film of increased properties.

The profile of the flanges of the present invention allows the formation and the maintenance of an oil film, and some research and development allowed the applicant to conclude that a rounded profile with six channels increased the load capacity of the bearing up to 8 times if compared to the prior art ones.

Table 1 below includes characteristics of three preferred embodiments:

**Table 1**

| | | **Sample #1** | **Sample #2** | **Sample #3** |
|---|---|---|---|---|
| **Ramp Length (L)** | Specif. [mm] | **2.5 / 4.5** | **2.5 / 4.5** | **2.5 / 4.5** |
| | Average [mm] | 3.521 | 3.616 | 3.306 |
| | CP | 1.34 | 2.46 | 1.90 |
| | CPK | 1.31 | 2.21 | 1.53 |
| **Ramp Depth (h)** | **Specif. [mm]** | **0.05/0.15** | **0.05/0.15** | **0.05/0.15** |
| | Average[mm] | 0.110 | 0.113 | 0.105 |
| | CP | 2.76 | 3.08 | 2.94 |
| | CPK | 2.19 | 2.30 | 2.97 |
| **Profile Height (H)** | Specif.[mm] | **0.06 / 0.19** | **0.06 / 0.19** | **0.06 / 0.19** |
| | Average[mm] | 0.144 | 0.147 | 0.138 |
| | CP | 4.45 | 1.77 | 3.42 |
| | CPK | 3.18 | 1.18 | 2.72 |
| **Angle** | Specif.[º] | **1.5 / 2.5** | **1.5 / 2.5** | **1.5 / 2.5** |
| | Average[º] | 1.801 | 1.783 | 1.809 |
| | CP | 2.97 | 2.25 | 2.56 |
| | CPK | 1.79 | 1.27 | 1.58 |
| **Groove Width** | Specif.[mm] | **3.00 / 3.5** | **3.00 / 3.5** | **3.00 / 3.5** |
| | Average[mm] | 3.235 | 3.220 | 3.219 |
| | CP | 2.78 | 2.86 | 2.69 |
| | CPK | 2.95 | 3.21 | 3.03 |

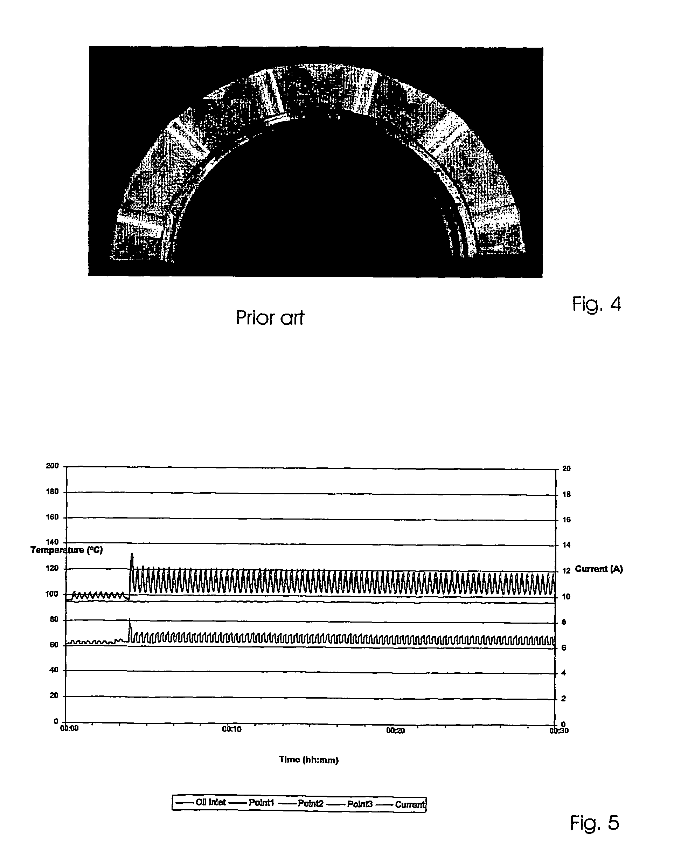

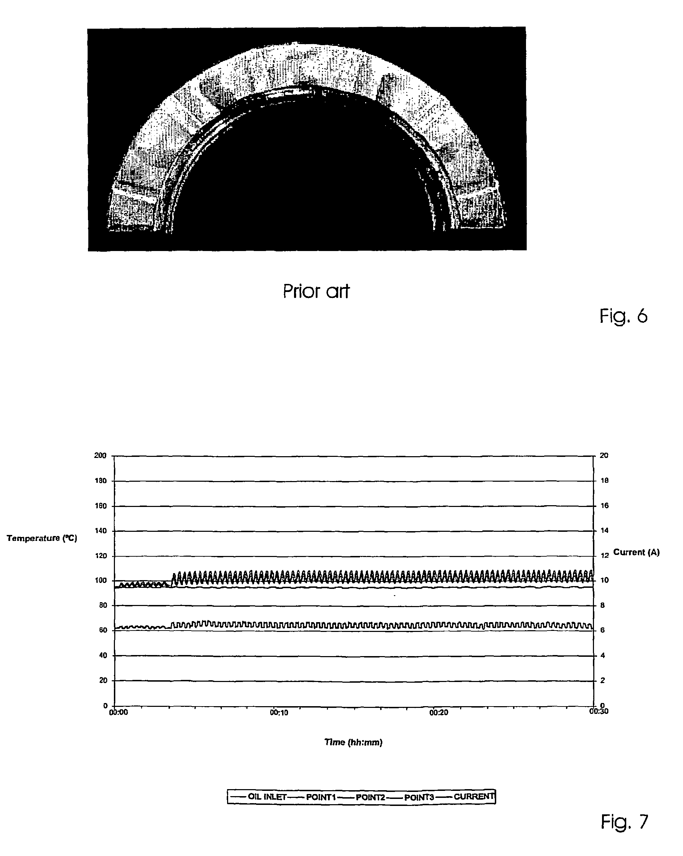

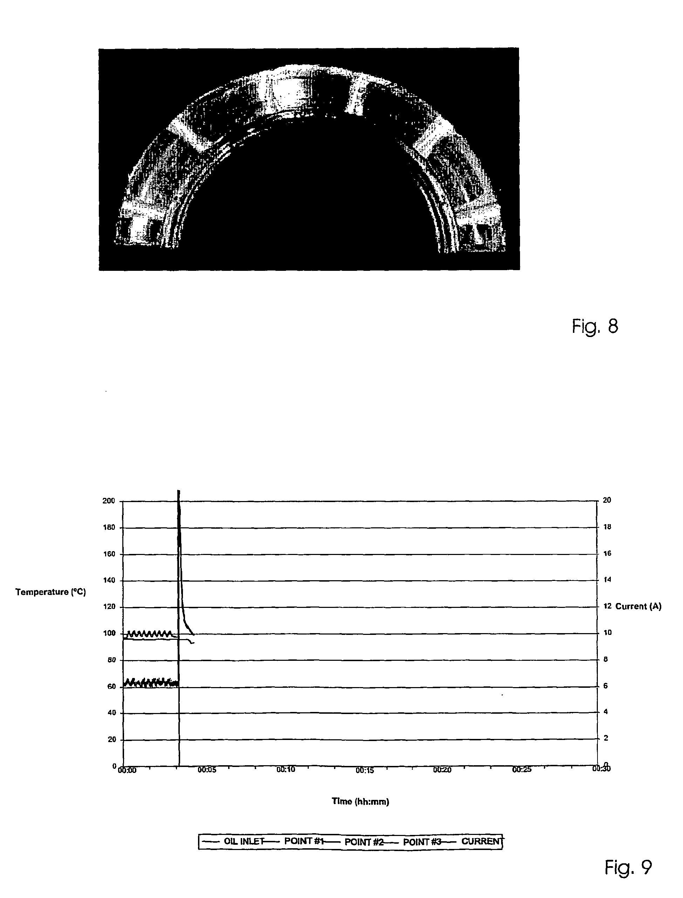

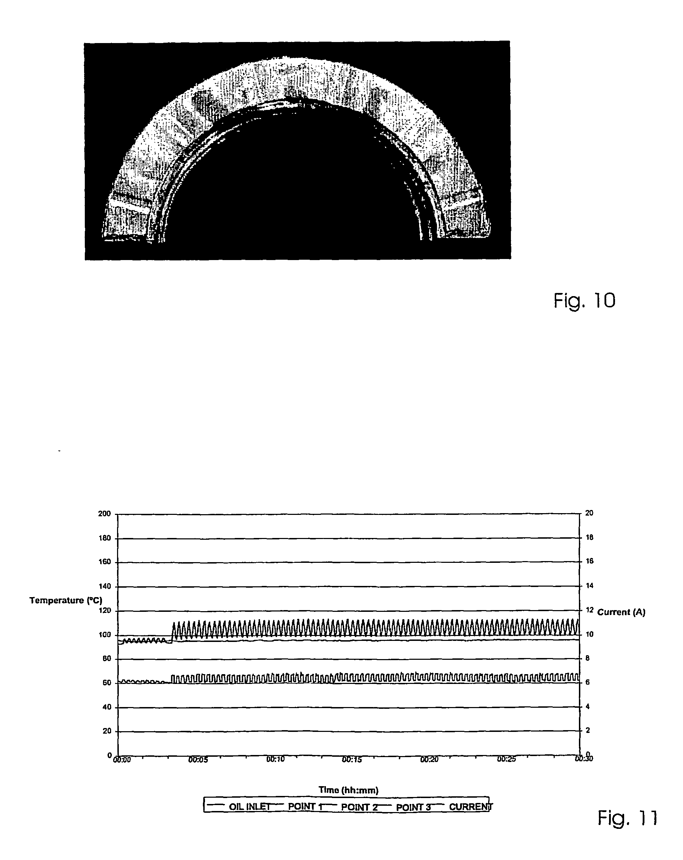

The object of the present invention did bench tests very successfully, presenting good performance and showing just light marking pattern with 2,000 lbf on slam test (significantly less that prior art components). Even after 2,500 lbf of slam test the marking patters were light (the current component often seizure with this load). For more details, see figures 4 to 11.

### Test Description summary

### 1. SLAM TEST (see table 2 below)

The tests were performed at the Modified Underwood machine with specified and controlled parameters during the test:
- Objective:
   To simulate a fast gear change
- Criteria for approval:
   50% above of maximum axial load measured on torque converter.
- Procedure:
   Intermittent constant load application: Load on by 10seconds /Load off by 10second

**Table 2**

| | **SLAM TEST** |
|---|---|
| **Shaft speed (rpm)** | 3060 |
| **Cheek material** | Nodular Cast Iron (ASTM A 536 - Class 65-45-12)* |
| **Roughness -Ra (µm)** | 0.20 to 0.25 |
| **Cheek hardness** | 30 HRC |
| **Oil type** | SAE 30 |
| **Inlet oil temperature** | 95 ± 5 (°C) |
| **Oil flow** | 1 liter / min |
| **Oil pressure** | 1.5 bar |
| **Application load mode** | 10s on / 10s off @ 30mi n with assembling check @ 250lbf during 10cycles |
| **Failure detection mode** | If the temperature at the steel back achieves 180°C or the electric current of the engine gets 9A. |

As another advantage, only one stage of tooling has to be changed to produce the flanges of the present invention.

Some preferred embodiments having been described, it should - be understood that the scope of the present invention embraces other possible variations, being limited only by the contents of the accompanying claims, which include the possible equivalents.

## Claims

1. Flange, particularly developed for use on a flanged bearing, the flange (4) being able to flex radially when axial load is applied, comprising:
- the flange (4) having a profile that comprises at least two channels (8) extending radially and equidistantly positioned defining a space therebetween;
- the defined space having at least two portions, where a first portion defines a straight ramp (9) starting from one of the channels (8) and ending at the beginning of a second portion (10);
- the second portion (10) being arcuate;
- the space between two channels (8) having a third portion in the form of a ramp analogous to the first portion defined by the straight ramp (9), this third portion connecting the second portion (10) to the other channel (8);
- the ramp (9) having a length and a depth; **characterised in that**:
- the ratio between the ramp (9) length and depth is substancially 35.

2. Flange according to claim 1, **characterized in that** the ramp (9) has (i) a length between 2.5 to 4.5, millimeters, (ii) a depth between 0.050 to 0.150 millimeters, and (iii) the space between two channels (8) has a height between 0.06 to 0.19 millimeters.

3. Flange according to claim 1 and 2, **characterized in that** the value of the height of the space between two channels (8) includes the height of the ramp (9) and the second portion (10) and excludes the height of the channel's walls.

4. Flange as defined in claims 1 to 3 **characterized in that** the space between two channels (8) is formed by coining.

5. Flange according to claim 4, **characterized in that** the defined space between two channels (8) is bumpless.

## Patentansprüche

1. Flansch, insbesondere entwickelt zur Verwendung an einem Flanschlager, wobei der Flansch (4) dazu in der Lage ist, sich radial zu biegen, wenn eine axiale Last aufgebracht wird, wobei:
der Flansch (4) ein Profil hat, das weinigstens zwei Kanäle (8) aufweist, die sich radial erstrecken und mit gleichem Abstand positioniert sind, wodurch ein Bereich zwischen diesen festgelegt wird;
der festgelegte Bereich wenigstens zwei Abschnitte aufweist, wobei ein erster Anschnitt eine gerade Rampe (9) festlegt, die bei einem der Kanäle (8) beginnt und bei dem Anfang eines zweiten Abschnitts (10) endet;
der zweite Abschnitt (10) bogenförmig ist;
der Bereich zwischen den zwei Kanälen (8) einen dritten Abschnitt in der Gestalt einer Rampe aufweist, analog zu dem durch die gerade Rampe (9) festgelegten ersten Abschnitt, wobei dieser dritte Abschnitt den zweiten Abschnitt (10) und den anderen Kanal (8) verbindet;
die Rampe (9) eine Länge und eine Tiefe aufweist; **gekennzeichnet dadurch, dass**:
das Verhältnis zwischen der Länge und der Tiefe der Rampe (9) im Wesentlichen 35 beträgt.

2. Flansch nach Anspruch 1, **gekennzeichnet dadurch, dass** die Rampe (9) (i) eine Länge zwischen 2,5 bis 4,5 Millimeter hat, (ii) eine Tiefe zwischen 0,050 bis 0,150 Millimeter hat, und (iii) der Bereich zwischen zwei Kanälen (8) eine Höhe zwischen 0,06 bis 0,19 Millimeter hat.

3. Flansch nach Anspruch 1 und 2, **gekennzeichnet dadurch, dass** der Wert der Höhe des Bereichs zwischen zwei Kanälen (8) die Höhe der Rampe (9) und des zweiten Abschnitts (10) umfasst und die Höhe der Kanalwände ausschließt.

4. Flansch nach Ansprüchen 1 bis 3, **gekennzeichnet dadurch, dass** der Bereich zwischen zwei Kanälen (8) durch Prägen ausgebildet ist.

5. Flansch nach Anspruch 4, **gekennzeichnet dadurch, dass** der festgelegte Bereich zwischen zwei Kanälen (8) unebenheitsfrei ist.

## Revendications

1. Flasque développé en particulier pour être utilisé sur un palier à flasque, le flasque (4) étant capable de fléchir radialement lorsqu'une charge axiale est appliquée, comprenant :
- le flasque (4) présentant un profilé qui comprend au moins deux canaux (8) s'étendant radialement et positionnés à équidistante définissant un espace entre eux ;
- l'espace défini présentant au moins deux parties, où une première partie définit une rampe droite (9) partant de l'un des canaux (8) et se terminant au début d'une seconde partie (10) ;
- la seconde partie (10) étant arquée ;
- l'espace entre deux canaux (8) présentant une troisième partie sous la forme d'une rampe analogue à la première partie définie par la rampe droite (9), la troisième partie reliant la seconde partie (10) à l'autre canal (8) ;
- la rampe (9) présentant une longueur et une profondeur ; **caractérisé en ce que** :
- le rapport entre la longueur et la profondeur de rampe (9) s'élève sensiblement à 35.

2. Flasque selon la revendication 1, **caractérisé en ce que** la rampe (9) présente (i) une longueur comprise entre 2,5 et 4,5 millimètres, (ii) une profondeur comprise entre 0,050 et 0,150 millimètres et (iii) l'espace entre les deux canaux (8) présente une hauteur comprise entre 0,06 et 0,19 millimètres.

3. Flasque selon les revendications 1 et 2, **caractérisé en ce que** la valeur de la hauteur de l'espace entre deux canaux (8) comprend la hauteur de la rampe (9) et de la seconde partie (10) et exclut la hauteur des parois de canal.

4. Flasque selon l'une quelconque des revendications 1 à 3, **caractérisé en ce que** l'espace entre deux canaux (8) est formé par formage.

5. Flasque selon la revendication 4, **caractérisé en ce que** l'espace défini entre deux canaux (8) est sans bosse.
